# EUROPEAN PATENT APPLICATION

(11) **EP 4 228 120 A1**
(43) Date of publication of application: **16.08.2023**
(21) Application number: 20960367.9
(22) Date of filing: 06.11.2020
(51) Int. Cl.: H02J 7/34, H02J 9/06, H02M 3/158

(54) **POWER SYSTEM, CHARGING METHOD, AND DISCHARGING METHOD**

(71) Applicant: Huawei Technologies Co., Ltd., Shenzhen, Guangdong 518129 (CN)
(72) Inventor: LI, Hui, Shenzhen, Guangdong 518129 (CN); SONG, Jun, Shenzhen, Guangdong 518129 (CN); LIU, Deshang, Shenzhen, Guangdong 518129 (CN); XU, Pengju, Shenzhen, Guangdong 518129 (CN)
(74) Representative: Epping - Hermann - Fischer
(86) International application number: PCT/CN2020/127003
(87) International publication number: WO 2022/094906

(57) **Abstract**

A power system, a charging method, and a power supply method are disclosed. The power system includes a first switch (K1), a second switch (K2), a first switched capacitor circuit (SC1), a second switched capacitor circuit (SC2), an inductive voltage conversion circuit (SL), an input end (Vin), a first charging end (Vc1), and a second charging end (Vc2). An input side (Vdi) of the inductive voltage conversion circuit (SL) is coupled to the input end (Vin). An output side (Vdo) of the inductive voltage conversion circuit (SL) is coupled to the first charging end (Vc1) through the first switch (K1), and is coupled to the second charging end (Vc2) through the second switch (K2). The first switched capacitor circuit (SC1) is coupled between the input end (Vin) and the first charging end (Vc1). The second switched capacitor circuit (SC2) is coupled between the input end (Vin) and the second charging end (Vc2). In this way, charging of a parallel battery pack is applicable to a plurality of charging scenarios, thereby improving charging flexibility of the parallel battery pack, and helping improve an endurance capability of an electronic device.

## Description

### TECHNICAL FIELD

Embodiments of this application relate to the field of circuit technologies, and in particular, to a power system, a charging method, and a discharging method.

### BACKGROUND

As electronic technologies develop, electronic device technologies have also been improved rapidly. In the conventional technology, to improve an endurance capability of an electronic device, a plurality of batteries are usually disposed in the electronic device to supply power to a load. In a scenario in which a plurality of batteries are disposed in the electronic device, the plurality of batteries are usually charged in a manner of connecting a battery pack in series, or the batteries are charged in a hybrid manner of connecting a battery pack in series and in parallel. In addition, an external adapter cannot directly charge a battery inside the electronic device. A charging circuit is usually disposed inside the electronic device. The charging circuit converts electric energy provided by the external adapter, to output a charging voltage and a charging current that are applicable to the battery, so as to charge the battery. In addition, when supplying power to the load in the electronic device, the load in the electronic device is usually supplied with power by using a battery pack connected in series.

Because charging voltages and charging currents of batteries may be affected differently by features such as battery aging, in a conventional multi-battery charging and discharging scenario, when the batteries connected in series are charged, a maximum charging current output by a charging circuit is limited by a charging current of each battery, and a maximum charging current for the battery may be far less than a maximum charging current for another battery. As a result, a charging speed of each battery is reduced, and in addition, some batteries may be undercharged, resulting in unbalanced charging of the batteries. When batteries are connected in series to supply power to the load, because an operating voltage required by the load is less than an output voltage of the serially connected batteries, a buck circuit is usually required to step down the voltage output by the serially connected batteries to meet an operating condition of the load. Using the buck circuit causes an energy loss, and reduces an endurance capability of the electronic device. Therefore, in a multi-battery charging and discharging scenario, how to charge the batteries in a balanced manner and control the batteries to supply power to the load in a balanced manner, to improve a charging speed of the batteries and an endurance capability of the electronic device becomes a problem that needs to be resolved.

### SUMMARY

According to a power system, and a charging method and a discharging method for a parallel battery pack provided in this application, batteries can be charged in a balanced manner, and the batteries can be controlled to supply power to a load in a balanced manner, thereby helping improve an endurance capability of an electronic device.

To achieve the foregoing objectives, the following technical solutions are used in this application.

According to a first aspect, an embodiment of this application provides a power system. The power system includes a first switch, a second switch, a first switched capacitor circuit, a second switched capacitor circuit, an inductive voltage conversion circuit, an input end, a first charging end, and a second charging end. An input side of the inductive voltage conversion circuit is coupled to the input end; an output side of the inductive voltage conversion circuit is coupled to the first charging end through the first switch, and is coupled to the second charging end through the second switch; the first switched capacitor circuit is coupled between the input end and the first charging end; and the second switched capacitor circuit is coupled between the input end and the second charging end.

According to the power system provided in this application, the inductive voltage conversion circuit may be used to charge batteries that are coupled to the first charging end and the second charging end respectively, or the first switched capacitor circuit and the second switched capacitor circuit may charge the batteries respectively, so that a battery charging manner can be flexibly adjusted based on a voltage of the first charging end and a voltage of the second charging end, and the batteries are charged in a balanced manner. This helps improve a charging speed of each battery and a service life of each battery.

According to the first aspect, in a possible implementation, the power system further includes a discharging end configured to supply power to a load, and the discharging end is coupled between the inductive voltage conversion circuit and the first switch and between the inductive voltage conversion circuit and the second switch.

Herein, the output side of the inductive voltage conversion circuit is connected to one end of the first switch to form a first node, the output side of the inductive voltage conversion circuit is connected to one end of the second switch to form a second node, the first node and the second node are connected together and have a same potential, and the discharging end is connected to the first node and the second node. In this way, the first switch and the second switch are controlled to be on or off, so that the power system can supply, based on potentials of the first charging end, the second charging end, and the discharging end, power to the load by using a single battery or by using a parallel battery pack together, so that the parallel battery pack can discharge in a balanced manner, thereby improving an endurance capability of the electronic device.

According to the first aspect, in a possible implementation, the power system further includes a first battery and a second battery, and the first charging end and the second charging end are configured to charge the first battery and the second battery respectively.

According to the first aspect, in a possible implementation, the power system further includes a control circuit, and the control circuit is configured to: when the voltage of the first charging end and the voltage of the second charging end are both within a preset voltage range, control the first switch and the second switch to be off.

In this implementation, the first switched capacitor circuit and the second switched capacitor circuit charge the first battery and the second battery respectively, and the inductive voltage conversion circuit stops charging the batteries. In this case, the inductive voltage conversion circuit may provide electric energy to the charging ends to maintain working of the load.

It should be noted that, based on an internal structure of a switched capacitor circuit, a voltage on an input side of the switched capacitor circuit dynamically changes with a voltage on an output side. Because both the first switched capacitor circuit and the second switched capacitor circuit are coupled to the input side of the inductive voltage conversion circuit, when the switched capacitor circuit and the inductive voltage conversion circuit are used at the same time, a voltage on the input side of the inductive voltage conversion circuit also changes. In this case, the selected inductive voltage conversion circuit needs to continuously adjust a wide range of voltages (for example, voltages in a range of 5 V to 12 V) input by the input side, so as to continuously output stable voltages suitable for battery charging.

According to the first aspect, if the first switch and the second switch are turned off, and the inductive voltage conversion circuit supplies power to the load, when a voltage of the discharging end suddenly decreases due to excessively high energy consumption of the load, the control circuit may be further configured to: when at least one of the voltage of the first charging end and the voltage of the second charging end is greater than a preset voltage threshold of the discharging end, control at least one of the first switch and the second switch to be on. For example, when the voltage of the first charging end is greater than the preset voltage threshold of the discharging end, the first switch may be controlled to be on. In this case, the battery may charge the load by using the discharging end, so as to suppress a voltage provided to the load from continuing to drop.

According to the first aspect, in a possible implementation, the power system further includes a control circuit, and the control circuit is configured to: when the voltage of the first charging end and the voltage of the second charging end are both within the preset voltage range, control the inductive voltage conversion circuit to stop supplying electric energy, control the first switched capacitor circuit to supply electric energy to the first charging end, and control the second switched capacitor circuit to supply electric energy to the second charging end. At least one of the first switch and the second switch is turned on.

In this implementation, the first switched capacitor circuit and the second switched capacitor circuit charge the first battery and the second battery respectively, and the inductive voltage conversion circuit stops charging the batteries. In this case, at least one switch is controlled to be on, so that the at least one battery supplies power to the load.

According to the first aspect, in a possible implementation, the control circuit is further configured to: when at least one of the voltage of the first charging end and the voltage of the second charging end is higher than an upper limit of the preset voltage range, control a switched capacitor circuit that is coupled to the charging end whose voltage exceeds the upper limit of the preset voltage range to stop providing electric energy.

According to the first aspect, in a possible implementation, the control circuit is further configured to: when both the voltage of the first charging end and the voltage of the second charging end are outside the preset voltage range, control the first switch and the second switch to be on.

In this case, the inductive voltage conversion circuit provides electric energy to the first charging end and the second charging end, and the first switched capacitor circuit and the second switched capacitor circuit stop providing electric energy.

According to the first aspect, if the first switch is on, the second switch is off, and the first battery supplies power to the load, when the voltage of the discharging end suddenly decreases due to excessively high energy consumption of the load and is lower than the preset voltage threshold of the second charging end, in a possible implementation, the control circuit is further configured to control the second switch to be on.

According to the first aspect, in a possible implementation, the first switch and the second switch are transistors.

According to the first aspect, in a possible implementation, when there is no voltage input to the input end and the first battery supplies power to the load, the control circuit is further configured to: when the voltage of the second charging end is greater than the preset voltage threshold of the discharging end, control the second switch to change from an off state to a linearly on state; and after a preset time, control the first switch to change from an on state to an off state, and control the second switch to change from the linearly on state to a fully on state.

According to a second aspect, an embodiment of this application provides a charging method for a parallel battery pack. The method includes: obtaining a voltage of a first charging end coupled to a first battery in the parallel battery pack and a voltage of a second charging end coupled to a second battery in the parallel battery pack; and when both the voltage of the first charging end and the voltage of the second charging end are within a preset voltage range, controlling an inductive voltage conversion circuit coupled to the first charging end and the second charging end to stop providing electric energy, controlling a first switched capacitor circuit coupled to the first charging end to provide electric energy to the first charging end, controlling a second switched capacitor circuit coupled to the second charging end to provide electric energy to the second charging end, and controlling at least one of a first switch and a second switch to be on, where the first switch is coupled between an output side of the inductive voltage conversion circuit and the first charging end, and the second switch is coupled between the output side of the inductive voltage conversion circuit and the second charging end.

According to the second aspect, in a possible implementation, the method further includes: when at least one of the voltage of the first charging end and the voltage of the second charging end is higher than an upper limit of the preset voltage range, controlling a switched capacitor circuit coupled to the charging end whose voltage exceeds the upper limit of the preset voltage range to stop providing electric energy.

According to the second aspect, in a possible implementation, the method further includes: when both the voltage of the first charging end and the voltage of the second charging end are outside the preset voltage range, controlling both the first switch and the second switch to be on.

According to the second aspect, in a possible implementation, the method further includes: when the first switch is turned on, the second switch is turned off, and the voltage of the second charging end is higher than a voltage of a discharging end used for supplying power to a load, controlling the second switch to be on.

According to the second aspect, in a possible implementation, after controlling the first switch coupled to the first charging end to be on, the method further includes: when at least one of the voltage of the first charging end and the voltage of the second charging end is less than the voltage of the discharging end, controlling a switch coupled to the charging end whose voltage is less than the voltage of the discharging end to be off.

According to a third aspect, an embodiment of this application provides a discharging method for a parallel battery pack. The method includes: in response to no voltage input to a power system, obtaining a voltage of a first charging end coupled to a first battery in the parallel battery pack and a voltage of a second charging end coupled to a second battery in the parallel battery pack; turning on the first switch when the voltage of the first charging end is greater than the voltage of the second charging end; obtaining a voltage of a discharging end that supplies power to a load; and turning on the second switch when the voltage of the discharging end is less than the voltage of the second charging end. The first switch is coupled between the first charging end and the discharging end, and the second switch is coupled between the second charging end and the discharging end.

Based on the third aspect, in a possible implementation, when the voltage of the discharging end is less than the voltage of the second charging end, the method further includes: keeping the first switch on.

Based on the third aspect, in a possible implementation, the first switch and the second switch are transistors.

Based on the third aspect, in a possible implementation, the method further includes: when the first switch is turned on, the second switch is turned off, and the voltage of the second charging end is higher than a preset voltage threshold of the discharging end, controlling the second switch to change from an off state to a linearly on state; and after a preset time, controlling the first switch to change from the on state to an off state, and controlling the second switch to change from the linearly on state to a fully on state.

### BRIEF DESCRIPTION OF DRAWINGS

To describe technical solutions in embodiments of this application more clearly, the following briefly introduces the accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic diagram of an application scenario of a power system according to an embodiment of this application;
FIG. 2a is a schematic diagram of a structure of a power system according to an embodiment of this application;
FIG. 2b is a schematic diagram of a structure of an inductive voltage conversion circuit according to an embodiment of this application;
FIG. 2c is a schematic diagram of a structure of a switched capacitor circuit according to an embodiment of this application;
FIG. 3 is a schematic diagram of a structure of a control circuit according to an embodiment of this application;
FIG. 4 is a flowchart of a charging method according to an embodiment of this application;
FIG. 5 is a schematic diagram of another structure of a power system according to an embodiment of this application;
FIG. 6 is a flowchart of a power supply method in which a power system supplies power to a load when a switched capacitor circuit charges a battery according to an embodiment of this application;
FIG. 7 is a flowchart of a power supply method for supplying power to a load when no electric energy is input to a power system according to an embodiment of this application; and
FIG. 8 is a flowchart of a power supply method in which a power system supplies power to a load in an ECO mode according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

"First", "second", or the like mentioned in this specification does not indicate any order, quantity, or importance, but is used only for distinguishing between different components. Likewise, "a/an", "one", or the like is not intended to indicate a quantity limitation either, but is intended to indicate existing at least one. "Connection", "link" or the like is not limited to a physical or mechanical connection, but may include an electrical connection, whether directly or indirectly. It is equivalent to coupling or communication in a broad sense.

In embodiments of this application, the term "and/or" describes an association relationship between associated objects and indicates that three relationships may exist. For example, A and/or B may indicate the following three cases: Only A exists, both A and B exist, and only B exists.

In embodiments of this application, the word "example" or "for example" is used to represent giving an example, an illustration, or a description. Any embodiment or design scheme described as "example" or "for example" in embodiments of this application should not be explained as being more preferred or having more advantages than another embodiment or design scheme. Exactly, use of the word such as "example" or "for example" is intended to present a relative concept in a specific manner.

In the description of embodiments of this application, unless otherwise stated, "a plurality of" means two or more than two. For example, a plurality of batteries means two or more batteries.

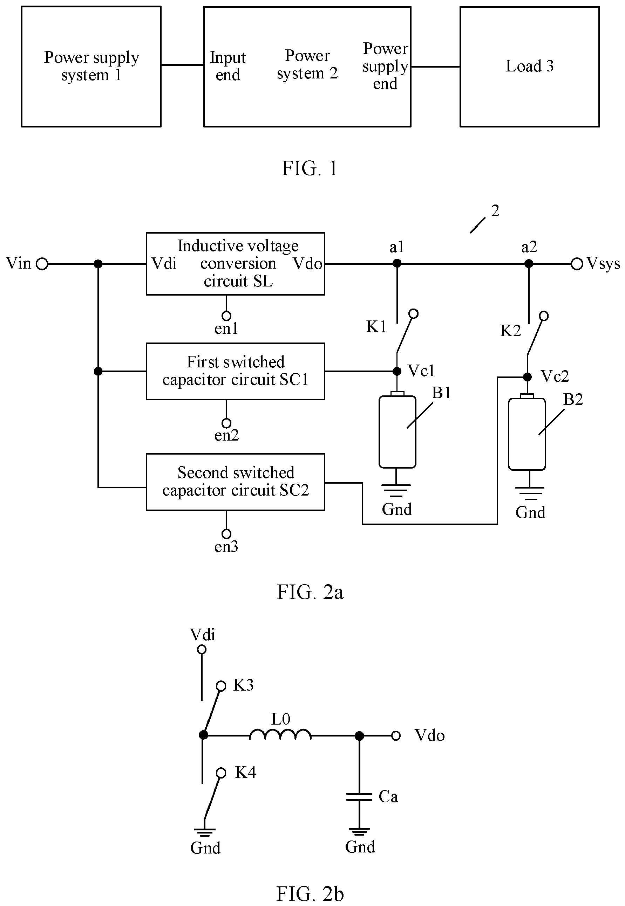

FIG. 1 is a schematic diagram of an application scenario of a power system according to an embodiment of this application. In the schematic diagram of the application scenario shown in FIG. 1, a power supply system 1, a power system 2, and a load 3 are included. The power system 2 includes an input end Vin and a discharging end Vsys. The power supply system 1 is coupled to the input end Vin of the power system 2, and the discharging end Vsys of the power system 2 is coupled to the load 3. In addition, the power system 2 may be further coupled to a plurality of batteries connected in parallel. The power system 2 may obtain electric energy from the power supply system 1, supply the obtained electric energy to the anode of the battery to charge the battery, and supply, to the load through the discharging end Vsys, electric energy input by a power supply end 1, to supply power to the load. The power supply system 1 may be an active circuit, and usually includes a voltage source, a current source, or the like. The input end Vin of the power system 2 may be connected to the power supply system 1 through a transmission line (for example, a USB cable). In addition, the power supply system 1 may further include a power adapter or the like. The power adapter converts a voltage provided by the power grid into a voltage applicable to the power system 2, to input electric energy to the power system 2. In addition to performing a charging function, the power system 2 can further implement a discharging function. When executing the discharging function, the power system is used to control electric energy that flows from a battery to the load 3. The load 3 may be a processor of various types or a component of another type, for example, a graphics processing unit (GPU) or a central processing unit (CPU). The load 3 may alternatively be various integrated circuit chips. The integrated circuit chip includes but is not limited to an artificial intelligence chip, an image processing chip, and the like. This is not limited herein.

Based on the application scenario shown in FIG. 1, continue to refer to FIG. 2a. FIG. 2a is a schematic diagram of a structure of the power system 2 according to an embodiment of this application.

As shown in FIG. 2a, the power system 2 includes an inductive voltage conversion circuit SL, a first switch K1, a second switch K2, an input end Vin, a first charging end Vc1, and a second charging end Vc2. The inductive voltage conversion circuit SL includes an input side Vdi and an output side Vdo. The input side Vdi of the inductive voltage conversion circuit SL is coupled to the input end Vin of the power system 2. The output side Vdo of the inductive voltage conversion circuit SL is coupled to one end of the first switch K1 and one end of the second switch K2. The other end of the first switch K1 is coupled to the first charging end Vc1, and the other end of the second switch K2 is coupled to the second charging end Vc2.

In this embodiment of this application, the voltage provided by the power supply system 1 to the power system 2 usually cannot be directly applied to the battery or directly applied to the load, and the voltage input from the outside needs to be converted by a voltage conversion circuit into a voltage that can be used to directly supply power to the load or meet a battery charging requirement, to supply power to the load or charge the battery. In a specific implementation, the voltage conversion circuit may be a circuit that increases or decreases a voltage input at the input end Vin to output the voltage through the output side Vdo. In addition, the inductive voltage conversion circuit SL in this embodiment of this application may include but is not limited to a buck (Buck) circuit, a boost (Boost) circuit, a boost-buck (Boost-Buck) circuit, or the like. Which one of the buck circuit, the boost circuit, or the boost-buck circuit is specifically used is determined based on a capacity of batteries connected to the first charging end Vc1 and the second charging end Vc2 and a power supply voltage required for running the load. The inductive voltage conversion circuit achieves electric energy output through charging and discharging of an inductor. The following briefly describes a structure and a working principle of an inductive voltage conversion circuit by using a buck circuit as an example. FIG. 2b is a schematic diagram of a structure of a buck circuit. As shown in FIG. 2b, the buck circuit includes a switch K3, a switch K4, an inductor L0, and a capacitor Ca. One end of the switch K3, one end of the switch K4, and one end of the inductor L0 are all coupled together, the other end of the switch K3 is coupled to an input side Vdi of the buck circuit, the other end of the switch K4 is coupled to a common ground, the other end of the inductor L0 is coupled to an output side Vdo of the buck circuit, and the capacitor Ca is coupled between the output side Vdo and a common ground Gnd. In specific working, in a first time period, the switch K3 is turned on and the switch K4 is turned off, and a current flows to the inductor L0 through the input side Vdi. Currents on two sides of the inductor L0 cannot change abruptly, and the inductor L0 has a function of preventing a current from flowing through. In this period, an extremely large part of charge input from the input side Vdi is stored in the inductor L0, and a small part of the charge passing through the inductor L0 is stored in the capacitor Ca, and is output through the output side Vdo. In a second time period, the switch K4 is turned on, the switch K3 is turned off, the inductor L0 has no current flowing in, and the inductor L0 has a function of suppressing current reduction. In this period, the inductor L0, the capacitor Ca, and the common ground Gnd form a closed loop, and charge stored in the inductor L0 is output through the output end Vdo. In this way, in the inductive voltage conversion circuit, electric energy output is implemented by charging and discharging the inductor L0, and the output voltage can be regulated by controlling a magnitude of the inductor L0 and duty cycles of the switch K3 and the switch K4. In addition, the inductor L0 usually has a relatively high parasitic resistance, and trickle charging of the load can be implemented by properly using the parasitic resistance.

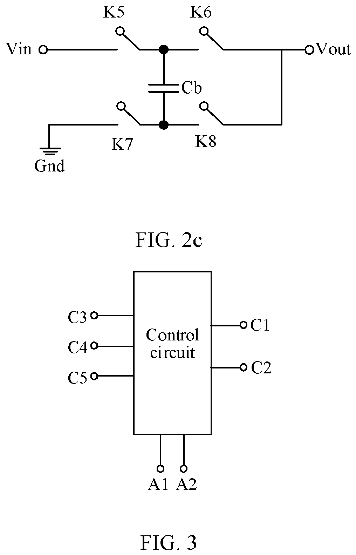

In this embodiment of this application, the power system 2 further includes a first switched capacitor circuit SC1 and a second switched capacitor circuit SC2. The first switched capacitor circuit SC1 is coupled between the input end Vin and the first charging end Vc1, and the second switched capacitor circuit SC2 is coupled between the input end Vin and the second charging end Vc2. A switched capacitor circuit includes a circuit for charging and discharging a capacitor, and can output electric energy by discharging the capacitor or by directly connecting an output and an input. FIG. 2c is a schematic diagram of a structure of a switched capacitor circuit. The switched capacitor circuit includes a switch K5, a switch K6, a switch K7, a switch K8, and a capacitor Cb. One end of the switch K5, one end of the switch K6, and one end of the capacitor Cb are coupled together. The other end of the switch K5 is coupled to an input end Vin. The other end of the switch K6 is coupled to an output end Vout of the switched capacitor circuit, that is, coupled to a charging end of the power system 2 (for example, an output end of the first switched capacitor circuit SC1 is coupled to the first charging end Vc1). The other end of the capacitor C1 is coupled to one end of the switch K7 and one end of the switch K8, the other end of the switch K7 is coupled to a common ground Gnd, and the other end of the switch K8 is coupled to the output end Vout. The switched capacitor circuit shown in FIG. 2c includes two working modes. A first working mode: In a first time period, the switch K5 and the switch K8 are turned on, and the switch K6 and the switch K7 are turned off. In this case, a voltage input by the input end Vin is applied to a plate of the capacitor Cb to charge the capacitor Cb, and charge stored in the capacitor Cb may be output through the output end Vout. In a second time period, the switch K5 and the switch K8 are turned off, and the switch K6 and the switch K7 are turned on. In this case, the capacitor Cb discharges, and charge stored in the capacitor Cb is output through the output end Vout. Certainly, the switched capacitor in FIG. 2c has a second working mode: The switch K5 and the switch K6 are turned on, and the switch K7 and the switch K8 are turned off. In this case, the input end Vin is directly connected to the output end Vout, and electric energy input from the input end Vin is directly output through the output end Vout. It can be learned that, the switched capacitor circuit uses the capacitor Cb as a charging and discharging device, and can output electric energy by using the capacitor or a direct connection manner. In addition, the capacitor Cb in the switched capacitor circuit usually has a relatively small parasitic resistance, that is, in either working mode, the switched capacitor circuit usually has relatively high electric energy conversion efficiency, and can improve a battery charging speed and reduce battery charging duration compared with an inductive voltage conversion circuit. Because power output by the switched capacitor circuit is relatively large, generally trickle charging cannot be implemented.

According to the power system 2 provided in this embodiment of this application, the inductive voltage conversion circuit SL may be used to charge the batteries respectively coupled to the first charging end Vc1 and the second charging end Vc2, or the batteries may be charged by using the first switched capacitor circuit SC1 and the second switched capacitor circuit SC2 respectively. Existing adapters generally all support the inductive voltage conversion circuit SL, but the switched capacitor circuit needs to be adapted by using a dedicated adapter. Therefore, the inductive voltage conversion circuit SL, the first switched capacitor circuit SC1, and the second switched capacitor circuit SC2 are separately disposed, so that the power system 2 in this embodiment of this application is applicable to a plurality of charging scenarios. For example, when an adapter does not support the use of a switched capacitor circuit, the inductive voltage conversion circuit SL may be used for charging; or when an adapter supports the use of a switched capacitor circuit, the inductive voltage conversion circuit SL and the switched capacitor may be used together to implement fast charging of the battery.

Further, when the adapter supports charging by using the switched capacitor circuit, because a current output by the switched capacitor circuit is relatively large, when an anode voltage of the battery is excessively low, charging the battery by using the switched capacitor circuit is likely to cause undercharging of the battery and affect the battery life. In this case, the inductive voltage conversion circuit SL is required to perform trickle charging. When the anode voltage of the battery is excessively high, charging the battery by using the switched capacitor circuit is likely to cause a danger such as battery explosion due to overcharging. In this case, the inductive voltage conversion circuit SL is required to perform charging. Therefore, in this embodiment of this application, the inductive voltage conversion circuit SL, the first switched capacitor circuit SC1, and the second switched capacitor circuit SC2 are disposed, so that a battery charging manner can be flexibly adjusted based on a voltage of the first charging end Vc1 and a voltage of the second charging end Vc2, and each battery is charged in a balanced manner. This helps improve a charging speed of each battery and a service life of each battery.

In addition, in a possible implementation, the power system 2 may further include a first battery B 1 and a second battery B2, as shown in FIG. 2a. Anodes of the first battery B 1 and the second battery B2 are respectively coupled to the first charging end Vc1 and the second charging end Vc2. In other words, the first battery B1 and the second battery B2 form a battery pack connected in parallel. Specifically, the anode of the first battery B 1 is coupled to the output side Vdo of the inductive voltage conversion circuit SL by using the first charging end Vc1 and the first switch K1, a cathode of the first battery B 1 is coupled to a common ground Gnd. The anode of the second battery B2 is coupled to the output side Vdo of the inductive voltage conversion circuit SL by using the second charging end Vc2 and the second switch K2, and a cathode of the second battery B2 is coupled to a common ground Gnd. When the first switch K1 and the second switch K2 are closed, the first battery B1 and the second battery B2 form a battery pack connected in parallel.

It may be understood that the figure shows an example in which the parallel battery pack includes two batteries. In this embodiment of this application, more batteries may be included. For example, the parallel battery pack may include more batteries such as a third battery and a fourth battery. Accordingly, the power system 2 shown in this embodiment of this application may further include more charging ends such as a third charging end and a fourth charging end. Correspondingly, the power system 2 may further include a third switched capacitor circuit coupled between the input end and the third charging end, a fourth switched capacitor circuit coupled between the input end and the fourth charging end, and the like. The inductive voltage conversion circuit SL is coupled to the third charging end and the fourth charging end by using the third switch and the fourth switch respectively. Details are not described in this embodiment of this application.

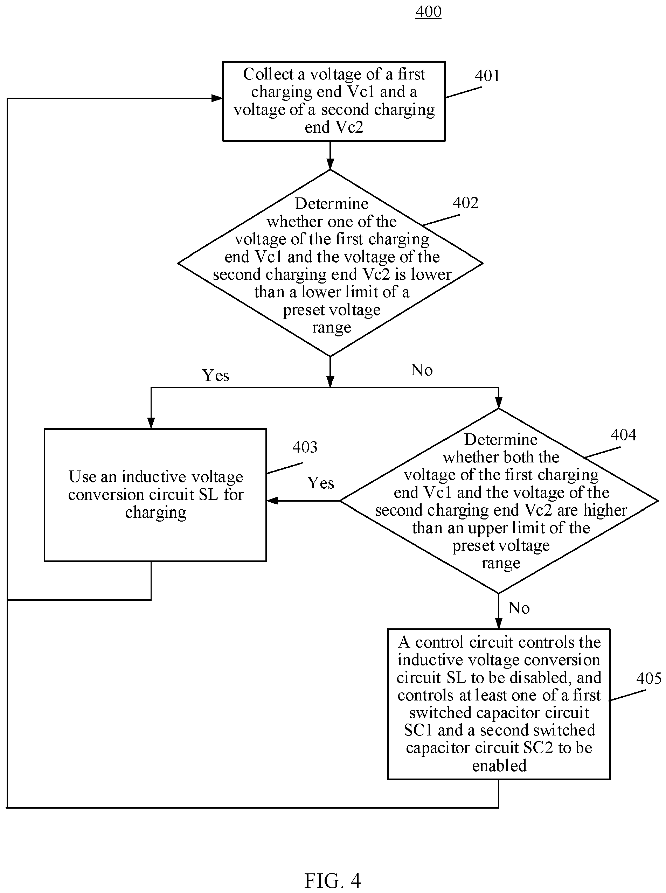

Further, as shown in FIG. 3, a control circuit may be further disposed in the power system 2 shown in this embodiment of this application. The control circuit may include a first data collection end A1, a second data collection end A2, a first control end C1, a second control end C2, a third control end C3, a fourth control end C4, and a fifth control end C5. The first data collection end A1 of the control circuit is coupled to the first charging end Vc1 to obtain a voltage of the first charging end Vc1. The second data collection end A2 of the control circuit is coupled to the second charging end Vc2 to obtain a voltage of the second charging end Vc2. The first control end C1 of the control circuit is coupled to a control end of the first switch K1 to control turn-on and turn-off of the first switch K1. The second control end C2 of the control circuit is coupled to a control end of the second switch K2 to control turn-on and turn-off of the second switch K2. The third control end C3 of the control circuit is coupled to an enabling end en1 of the inductive voltage conversion circuit SL, to control enabling or disabling of the inductive voltage conversion circuit SL. The fourth control end C4 of the control circuit is coupled to an enabling end en2 of the first switched capacitor circuit SC1, to control enabling or disabling of the first switched capacitor circuit SC1. The fifth control end C5 of the control circuit is coupled to an enabling end en3 of the second switched capacitor circuit SC2, to control enabling or disabling of the second switched capacitor circuit SC2. An enabling end of each of the foregoing circuits is configured to receive an enabling signal or a disabling signal. The enabling signal triggers the corresponding circuit to start working to charge a battery, and the disabling signal triggers the corresponding circuit to stop working to stop charging the battery. It should be noted that, after receiving an enabling signal, each of the foregoing circuits may automatically provide, based on a preset structure in the circuit, electric energy input by the input end Vin to the charging end to charge the battery. In specific implementation, the control circuit may be a circuit including analog devices such as a comparator, an error amplifier, and a gating device. In addition, in some other scenarios, the control circuit may alternatively be implemented by using a programmable logic device or the like. A specific implementation of the control circuit is not limited in this embodiment of this application. The control circuit may collect voltages of the first charging end Vc1 and the second charging end Vc2 respectively through the first data collection end A1 and the second data collection end A2, and control, based on the voltages of the first charging end Vc1 and the second charging end Vc2 by using the third control end C3, the inductive voltage conversion circuit SL to be enabled, so that the inductive voltage conversion circuit SL charges the first battery B1 and the second battery B2 by using the first charging end Vc 1 and the second charging end Vc2 respectively. In addition, based on the voltages of the first charging end Vc1 and the second charging end Vc2, the control circuit may further control the inductive voltage conversion circuit SL to be disabled, and control the first switched capacitor circuit SC1 and the second switched capacitor circuit SC2 to be enabled, so that the first switched capacitor circuit SC1 and the second switched capacitor circuit SC2 charge the first battery B1 and the second battery B2 by using the first charging end Vc1 and the second charging end Vc2 respectively. The following describes in detail a charging method for charging a battery by the power system 2 with reference to a procedure 400 of the charging method shown in FIG. 4.

Step 401: A control circuit obtains a voltage of a first charging end Vc1 and a voltage of a second charging end Vc2.

Step 402: The control circuit determines whether either of the voltage of the first charging end Vc1 and the voltage of the second charging end Vc2 is lower than a lower limit of a preset voltage range.

The preset voltage range is determined based on a battery performance parameter, and the battery performance parameter includes but is not limited to a battery capacity, a charging current that can be borne by the battery, and a charging voltage. When either of the voltage of the first charging end Vc 1 and the voltage of the second charging end Vc2 is lower than the lower limit of the preset voltage range, it indicates that the voltage of the battery is excessively low, and charging the battery by using a switched capacitor circuit may easily cause excessively large current impact on the battery, thereby reducing a service life of the battery. In this case, the inductive voltage conversion circuit SL is used to charge each battery, that is, step 403 is performed. When the voltage of the first charging end Vc1 and the voltage of the second charging end Vc1 are both higher than the lower limit of the preset voltage range, step 404 is performed.

Step 403: The control circuit controls the inductive voltage conversion circuit SL to charge a first battery B1 and a second battery B2.

The control circuit controls the inductive voltage conversion circuit SL to be enabled, controls the first switch K1 and the second switch K2 to be on, and controls the first switched capacitor circuit SC1 and the second switched capacitor circuit SC2 to be disabled. Currents output by an output side Vdo of the inductive voltage conversion circuit SL flow into the first battery B1 and the second battery B2 through the first charging end Vc1 and the second charging end Vc2 respectively, so as to charge the first battery B 1 and the second battery B2.

Step 404: The control circuit determines whether the voltage of the first charging end Vc 1 and the voltage of the second charging end Vc2 are both higher than the upper limit of the preset voltage range.

When the voltage of the first charging end Vc1 and the voltage of the second charging end Vc2 are both higher than the upper limit of the preset voltage range, it indicates that the battery is about to be fully charged, and charging the battery by using a switched capacitor circuit is likely to cause excessive current impact on the battery. In this case, the inductive voltage conversion circuit SL is used to charge each battery, that is, step 403 is performed; and when at least one of the voltage of the first charging end Vc1 and the voltage of the second charging end Vc2 is lower than the upper limit of the preset voltage range, step 405 is performed.

Step 405: The control circuit controls the inductive voltage conversion circuit SL to be disabled, and controls at least one of the first switched capacitor circuit SC1 and the second switched capacitor circuit SC2 to be enabled.

In specific implementation, the control circuit may further determine whether one of the voltage of the first charging end Vc1 and the voltage of the second charging end Vc2 is higher than the upper limit of the preset voltage range.

When both the voltage of the first charging end Vc1 and the voltage of the second charging end Vc2 are lower than the upper limit of the preset voltage range, the control circuit controls the inductive voltage conversion circuit SL to be disabled, and controls the first switched capacitor circuit SC1 and the second switched capacitor circuit SC2 to be enabled. In this case, a current output from an output side of the first switched capacitor circuit SC1 flows into the first battery B1 through the first charging end Vc1, to charge the first battery B 1, and a current output from an output side of the second switched capacitor circuit SC2 flows into the second battery B2 through the second charging end Vc2, to charge the second battery B2.

When a voltage of one of the charging ends is higher than the upper limit of the preset voltage range, it indicates that a battery corresponding to the charging end is to be fully charged. In this case, charging the battery by using a switched capacitor circuit is likely to cause excessive current impact on the battery. In this case, the control circuit may control a switched capacitor circuit coupled to the charging end whose voltage is higher than the preset voltage range to be disabled. The first battery B 1 is used as an example. When detecting that the voltage of the first charging end Vc1 is higher than the upper limit of the preset voltage range, the control circuit controls the first switched capacitor circuit SC1 to be disabled. It should be noted that, in this case, no circuit charges the first battery B 1, and the first battery B 1 may wait until the voltage of the second charging end Vc2 is higher than the upper limit of the preset voltage range, and the inductive voltage conversion circuit SL charges the batteries at the same time, that is, step 403 is performed.

It should be noted that in this embodiment of this application, because an input side of the switched capacitor circuit and an input side of the inductive voltage conversion circuit SL are both coupled to the input end Vin, when one battery is charged by using the switched capacitor circuit and the other battery is charged by using the inductive voltage conversion circuit SL (for example, the first battery B 1 is charged by using the inductive voltage conversion circuit SL, and the second battery B2 is charged by using the second switched capacitor circuit SC2) at the same time, based on the structure of the switched capacitor circuit shown in FIG. 2c, when the switched capacitor circuit charges a battery in a direct connection manner, a voltage on the input side of the switched capacitor circuit dynamically changes with a voltage on an output side. In other words, in this case, a voltage input on the input side of the inductive voltage conversion circuit SL dynamically changes within a specific range. This requires the inductive voltage conversion circuit SL to be able to continuously adjust a wide range of voltages input on the input side (for example, voltages in a range of 5 V to 12 V) to continuously output a stable voltage suitable for battery charging. However, a conventional inductive voltage conversion circuit SL usually converts a voltage (for example, a voltage of 5 V, a voltage of 9 V, or a voltage of 12 V) of a specific parameter that is input on an input side to output a stable voltage applicable to battery charging, and cannot continuously adjust a wide range of voltages. When different batteries are charged by using a switched capacitor circuit and a conventional inductive voltage conversion circuit SL at a same time, a voltage output by an output side of the inductive voltage conversion circuit SL is unstable, resulting in overcharging or undercharging of the battery. Consequently, the battery is damaged. If an inductive voltage conversion circuit SL whose voltages input on an input side are continuously adjustable in a relatively wide range is used, a relatively high requirement is imposed on a circuit structure of the inductive voltage conversion circuit SL, and design complexity of the inductive voltage conversion circuit SL is increased.

In conclusion, in the embodiment shown in FIG. 4, when one of the voltage of the first charging end Vc 1 and the voltage of the second charging end Vc2 is lower than the lower limit of the preset voltage range, the inductive voltage conversion circuit SL is used to charge both the batteries. When voltages of the two charging ends are both higher than the lower limit of the preset voltage range and lower than the upper limit of the preset voltage range, the switched capacitor circuits are used to charge the batteries at the same time. When voltages of both the two charging ends are higher than the upper limit of the preset voltage range, the batteries are both charged by using the inductive voltage conversion circuit SL. In this way, a conventional inductive voltage conversion circuit SL may be used to output a stable voltage to charge a battery, thereby reducing design and production costs of the inductive voltage conversion circuit SL.

Further, when the inductive voltage conversion circuit SL can continuously adjust a wide range of voltages that are input from the input side, the batteries may be separately and independently charged, that is, the two batteries do not need to be bound together for charging. For example, when the voltage of the first charging end Vc1 is less than the lower limit of the preset voltage range and the voltage of the second charging end Vc2 is higher than the upper limit of the preset voltage range, the first switch K1 may be controlled to be on, the second switch K2 may be controlled to be off, the first battery B 1 is charged by using the inductive voltage conversion circuit SL, and the second battery B2 is charged by using the second switched capacitor circuit SC2. In addition, when the voltage of the first charging end Vc1 falls between the lower limit of the preset voltage range and the upper limit of the preset voltage range, and the voltage of the second charging end Vc2 is higher than the upper limit of the preset voltage range, the first switch K1 may be controlled to be off, the second switch K2 may be controlled to be on, the first battery B1 is charged by using the first switched capacitor circuit SC1, and the second battery B2 is charged by using the inductive voltage conversion circuit SL.

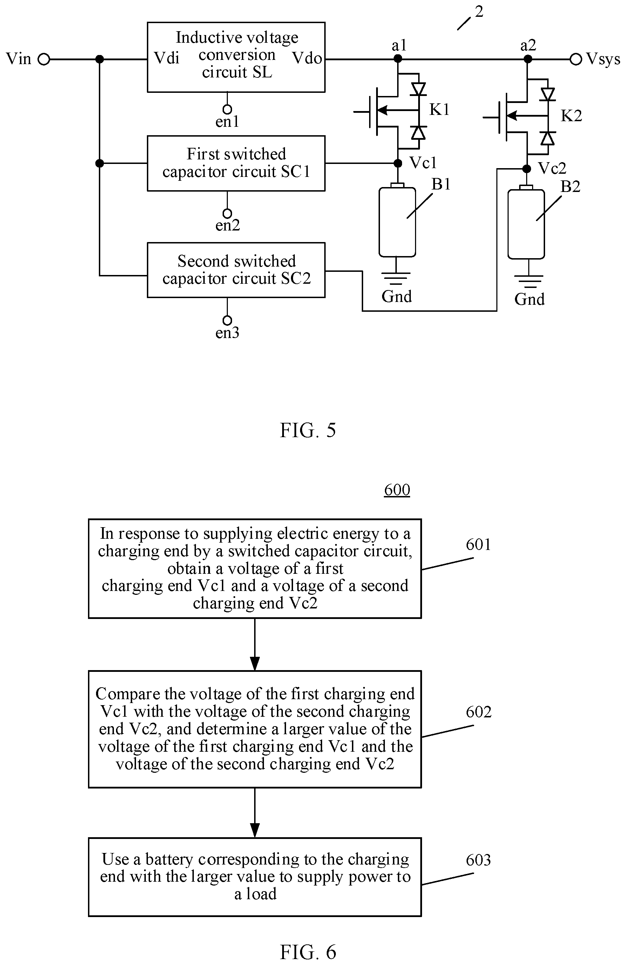

In a possible implementation of this embodiment of this application, the first switch K1 and the second switch K2 may be transistors. Based on a voltage difference between a source and a drain, a current may flow from the source to the drain, or from the drain to the source. The transistor may be turned on or off based on control of a gate voltage. In addition, a working status of the transistor when the transistor is on may be further classified into a linear state and a fully on state. When a voltage applied to the gate of the transistor is less than a start voltage threshold, the transistor is turned off or cut off. When the voltage applied to the gate of the transistor is greater than the start voltage threshold, the current between the drain and the source of the transistor changes with a voltage between the drain and the source. In this case, the transistor is in a linear state, which may also be referred to as a variable resistance state. When the current between the drain and the source of the transistor no longer changes with the voltage between the drain and the source, the transistor works in a fully on state, which may also be referred to as a saturated state or a constant current state. In addition, by adjusting the gate voltage of the transistor, a magnitude of the current between the drain and the source when the transistor enters the saturated state may be adjusted. When the first switch K1 and the second switch K2 are both transistors, a structure of the power system 2 is shown in FIG. 5. In this case, the control end C1 of the control circuit shown in FIG. 3 is coupled to a gate of the transistor K1, and the control end C2 of the control circuit is coupled to a gate of the transistor K2.

According to the battery charging method shown in FIG. 4, when the power system shown in FIG. 5 is used, when the inductive voltage conversion circuit SL charges the battery in step 403 shown in FIG. 4, a plurality of charging phases may be included, for example, a trickle charging phase, a constant current charging phase, and a constant voltage charging phase. In specific implementation, the control circuit adjusts gate voltages, sources, and drains of the transistor BF1 and the transistor BF2 respectively based on the voltage of the first charging end Vc1 and the voltage of the second charging end Vc2, so as to implement trickle charging, constant current charging, and constant voltage charging. An example in which the inductive voltage conversion circuit SL charges the first battery B1 by using the transistor K1 and the first charging end Vc1 is used for specific description. The control circuit compares the voltage of the first charging end Vc1 with a first preset voltage threshold, and when determining that the voltage of the first charging end Vc1 is less than the first preset voltage threshold, reduces a voltage applied to the gate of the transistor K1, or controls the inductive voltage conversion circuit SL to reduce a voltage on the output side Vdo, so as to reduce a voltage applied between the source and the drain of the transistor K1, so that the transistor K1 has high impedance to reduce a current flowing into the first charging end Vc1, to implements trickle charging. As charging duration increases, the voltage of the first charging end Vc1 rises. When detecting that the voltage of the first charging end Vc1 is higher than the first preset voltage threshold, the control circuit controls the inductive voltage conversion circuit SL to increase the voltage of the output side Vdo to increase the voltage between the source and the drain of the transistor K1, so that the transistor K1 is fully on, thereby implementing constant current charging or constant voltage charging. In addition, the control circuit may further increase the gate voltage of the transistor K1, to increase a charging current. For a manner in which the inductive voltage conversion circuit SL charges the second battery B2, refer to related descriptions of charging the first battery B1 by the inductive voltage conversion circuit SL. Details are not described herein again.

It should be noted that, in another application scenario, the first switched capacitor circuit SC1 and the second switched capacitor circuit SC2 may not be used, and only the inductive voltage conversion circuit SL is used to charge the first battery K1 and the second battery K2 until battery charging is completed.

Continue to refer to FIG. 2a and FIG. 5. In FIG. 2a and FIG. 5, the power system 2 further includes a discharging end Vsys configured to supply power to the load. Specifically, the output side Vdo of the inductive voltage conversion circuit SL is coupled to one end of the first switch K1 to form a first node a1, the output side Vdo of the inductive voltage conversion circuit SL is coupled to one end of the second switch K2 to form a second node a2, the first node a1 and the second node a2 are coupled together and have a same potential, and the discharging end Vsys is coupled to the first node a1 and the second node a2 together.

In this embodiment of this application, when the power system 2 charges the battery, to avoid a case in which the load cannot work due to insufficient power, when the inductive voltage conversion circuit SL charges the battery, the inductive voltage conversion circuit SL may further supply power to the load by using the discharging end Vsys; or when a switched capacitor circuit charges the battery, because the inductive voltage conversion circuit SL is not enabled in this case, one of the batteries may be used to supply power to the load. The following provides detailed descriptions.

When the inductive voltage conversion circuit SL charges the batteries, a part of currents output by the output side Vdo of the inductive voltage conversion circuit SL is provided to the first charging end Vc1 to charge the first battery B1, a part is provided to the second charging end Vc2 to charge the second battery B2, and a remaining part is provided to the discharging end Vsys to supply power to the load. Usually, when the inductive voltage conversion circuit SL charges the batteries, a voltage of the discharging end Vsys (that is, a voltage of the node a1, a voltage of the node a2, or a voltage of the output side Vdo of the inductive voltage conversion circuit SL) is higher than a voltage of the first charging end Vc1 and is also higher than a voltage of the second charging end Vc2, and currents flow from the node a and the node b to the first charging end Vc1 and the second charging end Vc2 respectively. When the voltage of the discharging end Vsys suddenly becomes lower due to excessive power consumption of the load and is lower than a voltage of a charging end, based on a voltage difference between the charging end and the discharging end Vsys, a battery coupled to the charging end is enabled to supplement electric energy to the load by using the discharging end Vsys. Because the battery and the inductive voltage conversion circuit SL supply power to the load at the same time, the voltage at the discharging end Vsys rises. When the voltage of the discharging end Vsys rises back to a value higher than the voltage of the charging end, the inductive voltage conversion circuit SL continues to charge the battery, and supplies power to the load by using the discharging end Vsys. It should be noted that, because charging of the first battery B1 and charging of the second battery B2 are independent of each other, and because of an aging speed of each battery and the like, potentials of the first charging end Vc1 and the second charging end Vc2 are usually unequal. The first battery B1 and the second battery B2 may reversely charge the load at the same time, or one of the batteries may reversely charge the load, which is determined by voltages of the charging ends.

When a switched capacitor circuit charges the battery, the two batteries may supply power to the load alternately. For a method for supplying power to the load by a battery by using the discharging end Vsys, refer to a procedure 600 shown in FIG. 6. The procedure 600 includes the following steps.

Step 601: The control circuit obtains a voltage of the first charging end Vc1 and a voltage of the second charging end Vc2.

Step 602: The control circuit compares the voltage of the first charging end Vc1 with the voltage of the second charging end Vc2, and determines a larger value of the voltage of the first charging end Vc1 and the voltage of the second charging end Vc2.

Step 603: Use a battery corresponding to a charging end with the larger value to supply power to the load.

In this embodiment, it is assumed that the control circuit detects that the voltage of the first charging end Vc1 is higher than the voltage of the second charging end Vc2. In this case, the first switch K1 is controlled to be on, the second switch K2 is controlled to be off, and the first battery B1 supplies power to the load by using a discharging end Vsys.

The control circuit may further continue to collect voltages of the first charging end Vc1 and the second charging end Vc2, compare the voltages of the first charging end Vc1 and the second charging end Vc2, and when it is detected that the voltage of the second charging end Vc2 is higher than the voltage of the first charging end Vc1, control the second switch K2 to be on, and control the first switch K1 to be off, and the second battery B2 supplies power to the load by using the discharging end Vsys.

According to the method shown in FIG. 6, in a possible implementation, when a voltage of the discharging end Vsys suddenly becomes lower due to excessively high power consumption of the load and is lower than a lower voltage of the voltages of the charging ends, the parallelly-connected batteries may simultaneously supplement electric energy to the load by using the discharging end Vsys. Because a plurality of batteries supply power to the load at the same time, the voltage of the discharging end Vsys rises. When the voltage of the discharging end Vsys rises back to a voltage higher than a lower voltage of the voltages of the charging ends, a single battery is used to supply power to the load. Specifically, when the first battery B1 supplies power to the load, the control circuit may further collect a voltage of the discharging end Vsys (that is, the node a1, the node a2, or the output side Vdo of the inductive voltage conversion circuit SL), compare the voltage of the discharging end Vsys with a voltage of the second charging end Vc2, and control, based on a comparison result, the second switch K2 to be on when it is determined that the voltage of the discharging end Vsys is lower than a preset voltage threshold of the second charging end Vc2. In this case, the first battery B1 and the second battery B2 simultaneously supply power to the load by using the discharging end Vsys. When the voltage of the discharging end Vsys is higher than the voltage of the second charging end Vc2, the second switch K2 is controlled to be off, and the second battery B2 stops supplying power to the load.

The foregoing describes a method for charging the first battery B1 and the second battery B2 when the input end Vin of the power system has electric energy input, and a method for supplying power to the load when the battery is being charged. The following describes a power supply method in which the first battery B1 and the second battery B2 supply power to the load when no electric energy is input to the input end Vin of the power system. When no electric energy is input to the input end Vin of the power system, the inductive voltage conversion circuit SL, the first switched capacitor circuit SC1, and the second switched capacitor circuit SC2 are all disabled.

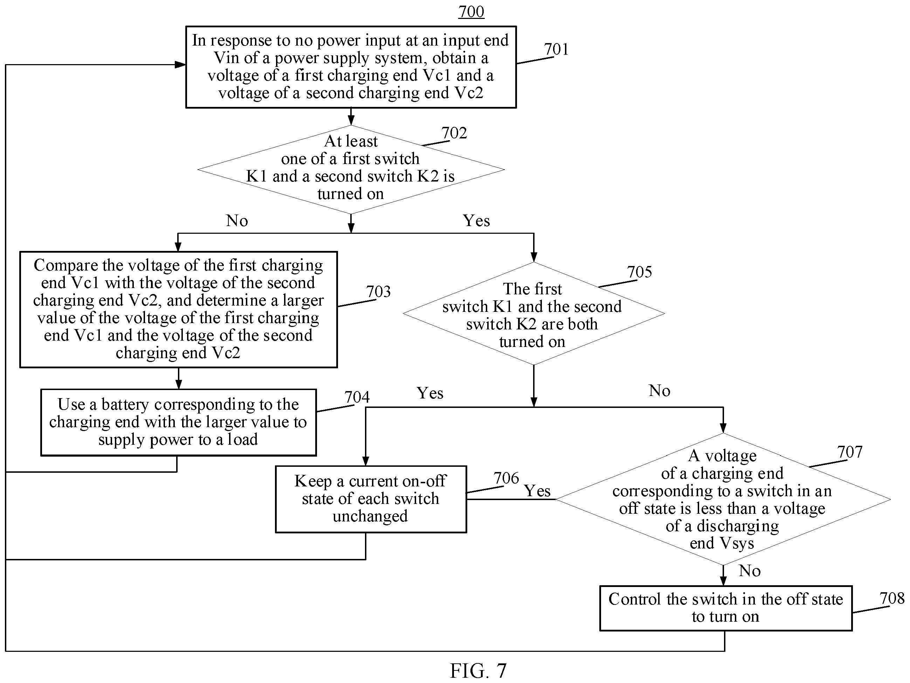

Continue to refer to FIG. 2a or FIG. 5, with reference to a procedure 700 shown in FIG. 7, a power supply method in which the first battery B1 and the second battery B2 supply power to the load when no electric energy is input to the input end Vin of the power system is described in detail.

Step 701: The control circuit obtains a voltage of the first charging end Vc1 and a voltage of the second charging end Vc2.

Step 702: Determine whether at least one of the first switch K1 and the second switch K2 is turned on.

When neither of the first switch K1 and the second switch K2 is turned on, the power supply system coupled to the input end of the power system may be just withdrawn. In this case, step 703 and step 704 are performed, so that one of the batteries supplies power to the load, and the load works normally. When at least one of the first switch K1 and the second switch K2 is turned on, step 705 may be further performed.

Step 703: Compare the voltage of the first charging end Vc1 with the voltage of the second charging end Vc2, and determine a larger value of the voltage of the first charging end Vc1 and the voltage of the second charging end Vc2.

Step 704: Use a battery corresponding to a charging end with the larger value to supply power to the load.

Based on step 703 and step 704, an example in which the voltage of the first charging end Vc1 is higher than the voltage of the second charging end Vc2 is used for description. When the voltage of the first charging end Vc1 is higher than the voltage of the second charging end Vc2, the first switch K1 coupled to the first charging end Vc1 is controlled to be on, so that the first battery B1 supplies power to the load by using the discharging end Vsys.

Step 705: Determine whether the first switch K1 and the second switch K2 are both turned on.

When both the first switch K1 and the second switch K2 are turned on, it indicates that in this case, the first battery B1 and the second battery B2 simultaneously supply power to the load by using the discharging end Vsys. In this case, a current on-off state of each switch may remain unchanged, that is, step 706 is performed. When one of the first switch K1 and the second switch K2 of the is turned on, step 707 is further performed.

Step 706: Keep the current on-off state of each switch unchanged.

Step 707: Determine whether a voltage of a charging end corresponding to a switch that is not turned on is less than a voltage of the discharging end Vsys.

When the voltage of the charging end corresponding to the switch that is not turned on is lower than the voltage of the discharging end Vsys, it indicates that the other battery still has sufficient electric energy at this time. In this case, the current on-off state of each switch may be kept unchanged, that is, step 706 is performed. When the voltage of the charging end corresponding to the switch that is not turned on is higher than or equal to the voltage of the discharging end Vsys, step 708 may be performed.

Step 708: Control the switch that is not turned on to be on.

In this case, the first battery B1 and the second battery B2 jointly supply power to the load by using the discharging end Vsys.

Based on step 707 and step 708, an example in which the first switch K1 is turned on and the second switch K2 is turned off is used for description. When the first switch K1 is turned on, the first battery B1 supplies power to the load by using the discharging end Vsys. The voltage of the discharging end Vsys is equal to the voltage of the first charging end Vc1 minus a turn-on voltage drop of the first switch K1. Generally, the turn-on voltage drop of the first switch K1 is very small and approximately ignored, and the voltage of the discharging end Vsys is approximately equal to the voltage of the first charging end Vc1. As discharge duration of the first battery B1 increases, an anode voltage of the first battery B1 gradually drops, that is, the voltage of the first charging end Vc1 gradually drops. When detecting that the voltage of the first charging end Vc1 is less than or equal to the voltage of the second charging end Vc2, the control circuit controls the second switch K2 to be on. In this case, the first battery B1 and the second battery B2 jointly supply power to the load by using the discharging end Vsys.

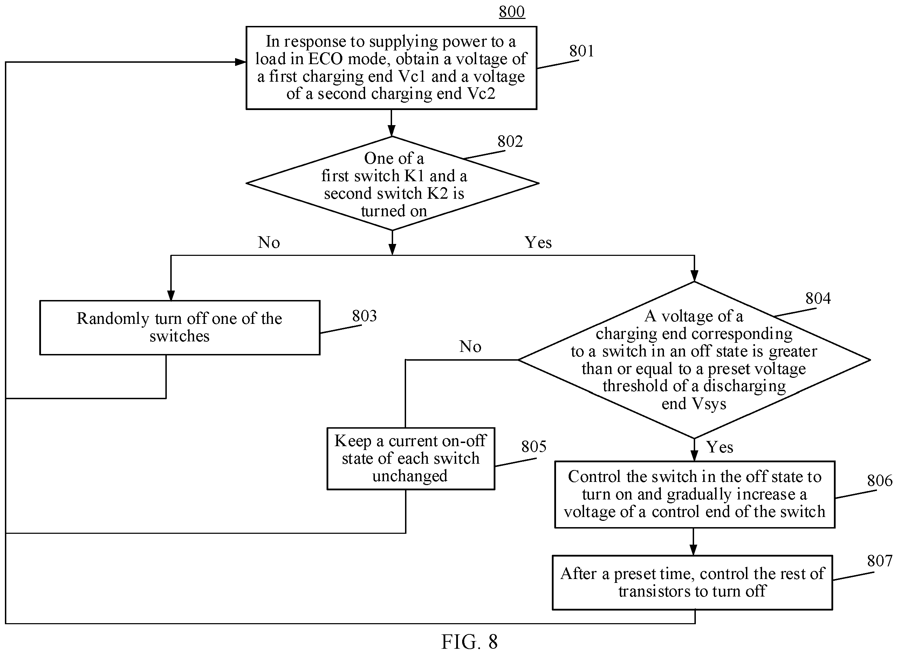

In a possible implementation, when there is no electric energy input to the input end Vin of the power system, a mode in which the parallel battery pack supplies power to the load further includes an ECO (Ecology ecology, Conservation conservation, Optimization optimization) mode, that is, a mode in which the batteries in the battery pack supply power to the load alternately. When the power system 2 is set to the ECO mode, a structure of the power system 2 may be shown in FIG. 5, that is, both the first switch K1 and the second switch K2 are transistors. Specifically, after receiving, from an upper-layer system (for example, a CPU) of an electronic device, a signal that indicates to use the ECO mode to supply power, the power system 2 may supply power to the load in the ECO mode. Specifically, with reference to FIG. 5 and FIG. 8, a battery discharging method in an ECO mode is described in detail. FIG. 8 schematically shows a procedure 800 of the discharging method in the ECO mode. The discharging method specifically includes the following steps.

Step 801: The control circuit obtains a voltage of the first charging end Vc1 and a voltage of the second charging end Vc2.

Step 802: The control circuit determines whether one of the first switch K1 and the second switch K2 is currently turned on.

In this implementation, when the control circuit determines that both the first switch K1 and the second switch K2 are turned on, one of the switches may be turned off randomly, that is, step 803 is performed. When the control circuit determines that one of the first switch K1 and the second switch K2 is turned on, step 804 is further performed.

Step 803: The control circuit randomly turns off one of the switches.

Step 804: The control circuit determines whether a voltage of a charging end corresponding to the switch that is not turned on is greater than or equal to a preset voltage threshold of the discharging end Vsys.

When it is determined that the voltage of the charging end corresponding to the switch that is not turned on is not greater than or equal to the preset voltage threshold of the discharging end Vsys, step 805 is performed; or when it is determined that the voltage of the charging end corresponding to the switch that is not turned on is greater than or equal to the preset voltage threshold of the discharging end Vsys, step 806 is performed.

Step 805: Keep a current on-off state of each switch unchanged.

Step 806: Control a switch that is not turned on to be on and gradually increase a voltage of a control end of the switch.

Herein, the control end of the switch is a gate of a transistor. By adjusting the gate of the transistor, a working status of the transistor may gradually change from a linear state to a fully on state.

Step 807: After a preset time, control the rest of transistors to turn off.

After a preset time, the transistor that is turned on in step 806 works in a fully on state. In this case, the rest of transistors may be controlled to be off. In this way, battery discharge conversion is implemented.

The following uses the power system shown in FIG. 5 as an example to describe the battery discharging method in the ECO mode by using a specific scenario.

The power system 2 may detect current on-off states of the first transistor K1 and the second transistor K2. When it is detected that both the first transistor K1 and the second transistor K2 are on, one of the transistors is turned off randomly. When detecting that one of the transistors is turned off, the control circuit keeps a current on-off state of each transistor unchanged. It is assumed that the second transistor K2 is currently turned off, and the first battery supplies power to the load by using the discharging end Vsys. The control circuit obtains the voltage of the second charging end Vc2 and the voltage of the discharging end Vsys. The control circuit determines whether the voltage of the second charging end Vc2 is greater than or equal to the preset voltage threshold of the power supply end Vsys. If the voltage of the second charging end Vc2 is not greater than or equal to the preset voltage threshold of the power supply end Vsys, the current on-off state of each transistor keeps unchanged. If the voltage of the second charging end Vc2 is greater than or equal to the preset voltage threshold of the power supply end Vsys, the control circuit controls the second transistor K2 to be on, and adjusts a gate voltage of the second transistor K2, so that the second transistor K2 works in a linear working area. After a preset time, the control circuit controls the second transistor K2 to work in a fully on state, and controls the first transistor K1 to be off. In this case, the second battery B2 supplies power to the load by using the discharging end Vsys.

The gate voltage of the second transistor K2 is controlled, so that the second transistor works in a linear working area. This can avoid that in a process of switching on/off states of the first switch and the second switch, a voltage or a current output by the discharging end Vsys to the load is unstable due to an unstable voltage or current, thereby ensuring stability of working of the load.

Embodiments of this application further provide an electronic device. The electronic device may be a portable computer (such as a mobile phone), a notebook computer, a wearable electronic device (such as a smartwatch), a tablet computer, an augmented reality (augmented reality, AR) device, a virtual reality (virtual reality, VR) device, a vehicle-mounted device, or the like. Specifically, the electronic device shown in this application includes the power system shown in the embodiment in FIG. 1, FIG. 2a, or FIG. 5.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A power system, comprising a first switch, a second switch, a first switched capacitor circuit, a second switched capacitor circuit, an inductive voltage conversion circuit, an input end, a first charging end, and a second charging end, wherein
an input side of the inductive voltage conversion circuit is coupled to the input end;
an output side of the inductive voltage conversion circuit is coupled to the first charging end through the first switch, and is coupled to the second charging end through the second switch;
the first switched capacitor circuit is coupled between the input end and the first charging end; and
the second switched capacitor circuit is coupled between the input end and the second charging end.

2. The power system according to claim 1, wherein the power system further comprises a discharging end configured to supply power to a load, and the discharging end is coupled both between the inductive voltage conversion circuit and the first switch and between the inductive voltage conversion circuit and the second switch.

3. The power system according to claim 1, wherein the power system further comprises a first battery and a second battery, and the first charging end and the second charging end are configured to charge the first battery and the second battery respectively.

4. The power system according to any one of claims 1 to 3, wherein the power system further comprises a control circuit, and the control circuit is configured to:
when both a voltage of the first charging end and a voltage of the second charging end are within a preset voltage range, control the first switch and the second switch to be off.

5. The power system according to any one of claims 1 to 3, wherein the power system further comprises a control circuit, and the control circuit is configured to:
when both a voltage of the first charging end and a voltage of the second charging end are within a preset voltage range, control the inductive voltage conversion circuit to stop providing electric energy, control the first switched capacitor circuit to provide electric energy to the first charging end, control the second switched capacitor circuit to provide electric energy to the second charging end, and control at least one of the first switch and the second switch to be on.

6. The power system according to claim 5, wherein the control circuit is further configured to:
when at least one of the voltage of the first charging end and the voltage of the second charging end is higher than an upper limit of the preset voltage range, control a switched capacitor circuit coupled to the charging end whose voltage exceeds the upper limit of the preset voltage range to stop providing electric energy.

7. The power system according to any one of claims 4 to 6, wherein the control circuit is further configured to:
when both the voltage of the first charging end and the voltage of the second charging end are outside the preset voltage range, control the first switch and the second switch to be on.

8. The power system according to claim 3, wherein the control circuit is further configured to:
when at least one of a voltage of the first charging end and a voltage of the second charging end is greater than a preset voltage threshold of the discharging end, control at least one of the first switch and the second switch to be on.

9. The power system according to claim 5 or 6, wherein the control circuit is further configured to:
when the first switch is turned on, the second switch is turned off, and the voltage of the second charging end is higher than a preset voltage threshold of the discharging end, control the second switch to be on.

10. The power system according to claim 2, wherein the first switch and the second switch are transistors.

11. The power system according to claim 10, wherein when no voltage is input to the input end and the first switch is turned on, the control circuit is further configured to:
when a voltage of the second charging end is higher than a preset voltage threshold of the discharging end, control the second switch to change from an off state to a linearly on state; and
after a preset time, control the first switch to change from the on state to an off state, and control the second switch to change from the linearly on state to a fully on state.

12. A charging method for a parallel battery pack, wherein the method comprises:
obtaining a voltage of a first charging end coupled to a first battery in the parallel battery pack and a voltage of a second charging end coupled to a second battery in the parallel battery pack; and
when both the voltage of the first charging end and the voltage of the second charging end are within a preset voltage range, controlling an inductive voltage conversion circuit coupled to the first charging end and the second charging end to stop providing electric energy, controlling a first switched capacitor circuit coupled to the first charging end to provide electric energy to the first charging end, controlling a second switched capacitor circuit coupled to the second charging end to provide electric energy to the second charging end, and controlling at least one of a first switch and a second switch to be on, wherein the first switch is coupled between an output side of the inductive voltage conversion circuit and the first charging end, and the second switch is coupled between the output side of the inductive voltage conversion circuit and the second charging end.

13. The charging method according to claim 12, wherein the method further comprises:
when at least one of the voltage of the first charging end and the voltage of the second charging end is higher than an upper limit of the preset voltage range, controlling a switched capacitor circuit coupled to the charging end whose voltage exceeds the upper limit of the preset voltage range to stop providing electric energy.

14. The charging method according to claim 12 or 13, wherein the method further comprises:
when both the voltage of the first charging end and the voltage of the second charging end are outside the preset voltage range, controlling both the first switch and the second switch to be on.

15. The charging method according to claim 12 or 13, wherein the method further comprises:
when the first switch is turned on, the second switch is turned off, and the voltage of the second charging end is higher than a voltage of a discharging end used for supplying power to a load, controlling the second switch to be on.

16. The method according to claim 15, wherein after the controlling the second switch to be on, the method further comprises:
when at least one of the voltage of the first charging end and the voltage of the second charging end is less than the voltage of the discharging end, controlling a switch coupled to the charging end whose voltage is less than the voltage of the discharging end to be off.

17. A discharging method for a parallel battery pack, comprising:
in response to no voltage input to a power system, obtaining a voltage of a first charging end coupled to a first battery in the parallel battery pack and a voltage of a second charging end coupled to a second battery in the parallel battery pack;
turning on the first switch when the voltage of the first charging end is greater than the voltage of the second charging end;
obtaining a voltage of a discharging end that supplies power to a load; and
turning on the second switch when the voltage of the discharging end is less than the voltage of the second charging end; wherein
the first switch is coupled between the first charging end and the discharging end, and the second switch is coupled between the second charging end and the discharging end.

18. The method according to claim 17, wherein when the voltage of the discharging end is less than the voltage of the second charging end, the method further comprises: keeping the first switch on.

19. The discharging method according to claim 17, wherein the first switch and the second switch are transistors.

20. The discharging method according to claim 19, wherein the method further comprises:
when the first switch is turned on, the second switch is turned off, and the voltage of the second charging end is higher than a preset voltage threshold of the discharging end, controlling the second switch to change from an off state to a linearly on state; and
after a preset time, controlling the first switch to change from the on state to an off state, and controlling the second switch to change from the linearly on state to a fully on state.
